# EUROPÄISCHE PATENTSCHRIFT

(11) **EP 2 073 148 B1**
(45) Veröffentlichungstag und Bekanntmachung des Hinweises auf die Patenterteilung: **25.05.2011**
(21) Anmeldenummer: 08020486.0
(22) Anmeldetag: 26.11.2008
(51) Int. Cl.: G06K 13/08, G06K 7/00

(54) **Schmutz- und Manipulationsgeschützter Kartenleser**
Card reader protected against dirt and manipulation
Lecteur de carte à puce protégé contre la manipulation et des impuretés

(30) Priorität: 21.12.2007 DE 102007062318
(43) Veröffentlichungstag der Anmeldung: 24.06.2009
(73) Patentinhaber: Amphenol-Tuchel Electronics GmbH, 74080 Heilbronn (DE)
(72) Erfinder: Bertsch, Michael, 74074 Heilbronn (DE)

(56) Entgegenhaltungen:
- DE-A1- 4 139 482
- DE-A1- 10 213 842
- JP-A- 2 035 584
- JP-A- 2000 090 205

## Beschreibung

Die vorliegende Erfindung bezieht sich auf einen Kartenleser beziehungsweise Chip- oder Smart-Card-Connector mit einer Schmutzklappe angeordnet in einem zur Aufnahme einer Smart-Card dienenden Kartenschacht. Ein derartiger kartenleser wird von DE 102 13 842 A1 offenbart.

Kartenleser sind vielfach bekannt und weisen im Allgemeinen ein Gehäuse auf, in welches eine Smart-Card, SIM-Karte oder andere Karte eingeschoben werden kann, um mit Kontaktelementen in elektrischen Kontakt zu kommen, die mit ihren Kontaktenden in einem vom Gehäuse gebildeten Kartenschacht ragen und entweder in einem Oberteil oder einem Unterteil des Gehäuses befestigt sind. Es gilt dabei einerseits das Eindringen von Schmutz und Staub durch den Karteneinsetzschlitz des Kartenlesers zu verhindern und andererseits aber auch zu verhindern, dass mit Gegenständen von Außen zum Zweck der Manipulation oder der Zerstörung in den Karteneinsetzschlitz hineingetaucht wird. Darüber hinaus besteht das Bedürfnis allgemeiner Art, den Kartenleser von seinem Kontaktbereich zum Außenraum, also außerhalb des Kartengehäuses und des Karteneinsetzschlitzes durch eine Schmutz- und Manipulationsschutzklappe zu schützen. Die Schmutz- und Manipulationsschutzklappe wird im Folgenden kurz Schutzklappe genannt. Die Erfindung betrifft einen Kartenleser gemäß Anspruch 1.

Die Schutzkfappe des erfindungsgmäßen Kartenlesers ist zwischen einer Schließstellung und einer Öffnungsstellung verschwenkbar, wenn sich die Schutzklappe in der Schließstellung befindet, so ist der Kartenschacht zum Einsetzschlitz hin verschlossen und nicht zugänglich. Die Schutzklappe kann sich von dieser Schließstellung in eine Öffnungsstellung bewegen lassen, so dass es möglich wird, eine dafür vorgesehene Karte in den Kartenleser einzusetzen, wobei die Schutzklappe in den Öffnungszustand verschwenkt. Vorzugsweise wird die Schutzklappe durch eine Rückstellfeder in ihre Schließstellung vorgespannt. Ferner erfolgt vorzugsweise der Übergang von der Schließstellung zur Öffnungsstellung dadurch, dass die Smart-Card beim Einschieben in den Kartenschacht auf Rampen der Schutzklappe auftritt und über diese Rampen entgegen der Kraft der Rückstellfeder in die Öffnungsstellung verschwenkt. Die Schutzklappe ist so in dem Gehäuse des Kartenlesers angebracht, dass diese in ihrer Schließstellung an dem Gehäusedeckel beziehungsweise an deren Innenseite anliegt. Die Rückstellfeder ist vorzugsweise ein Drahtfederbügel, der dann, wenn die Schutzklappe betätigt wird, durch die Karte entgegen der Rückstellkraft der Drahtfeder weiter durchgebogen wird.

Vorzugsweise ist die Drahtfeder so mit der Schutzklappe wirkverbunden, dass bei Betätigung der Schutzklappe durch das Einführen einer Karte einerseits die Drahtfeder entlang ihrer Achse gebogen wird und dabei die Schutzklappe eine Rotationsbewegung um eine zur Aufnahmeachse der Drahtfeder parallel versetzte Achse durchführt.

Die Rotationsachse der Schutzklappe liegt vorzugsweise hinter der Achse der Drahtfeder in Bezug auf die Einsetzöffnung.

Weitere Vorteile, Ziele und Einzelheiten der Erfindung ergeben sich aus der Beschreibung eines Ausführungsbeispiels anhand der Zeichnungen; in den Zeichnungen zeigt:
Fig. 1 eine perspektivische Ansicht eines erfindungsgemäßen Smart-Card-Connectors mit einem Deckel;
Fig. 2 eine perspektivische Abbildung eines Smart-Card-Lesers gemäß Fig. 1, jedoch ohne Deckel, im geöffneten Zustand;
Fig. 3 eine schräge Ansicht eines erfindungsgemäßen Smart-Card-Connectors ohne eingesetzte Schutzklappe;
Fig. 4 eine perspektivische Ansicht einer Schutzklappe;
Fig. 5 eine perspektivische Unteransicht einer Schutzklappe gemäß Fig. 4;
Fig. 6 eine Schnittansicht entlang der Längsachse eines Smart-Card-Connectors gemäß Fig. 1;
Fig. 7 eine perspektivische Ansicht eines Smart-Card-Connectors mit beginnendem Einsetzen einer Schutzklappe gemäß Fig. 4 und 5;
Fig. 8 eine ähnliche Ansicht wie in Fig. 7, jedoch mit eingesetzter Drahtfeder;
Fig. 9 eine teilperspekdvische Ansicht gemäß Fig. 2 bei dem die Schutzlappe vollständig eingesetzt ist;
Fig. 10 eine zu Fig. 9 gedrehte perspektivische Ansicht mit Sicht auf die unbelastete Drahtfeder;
Fig. 11 eine Schnittansicht quer durch den erfindungsgemäßen Smart-Card-Connector.

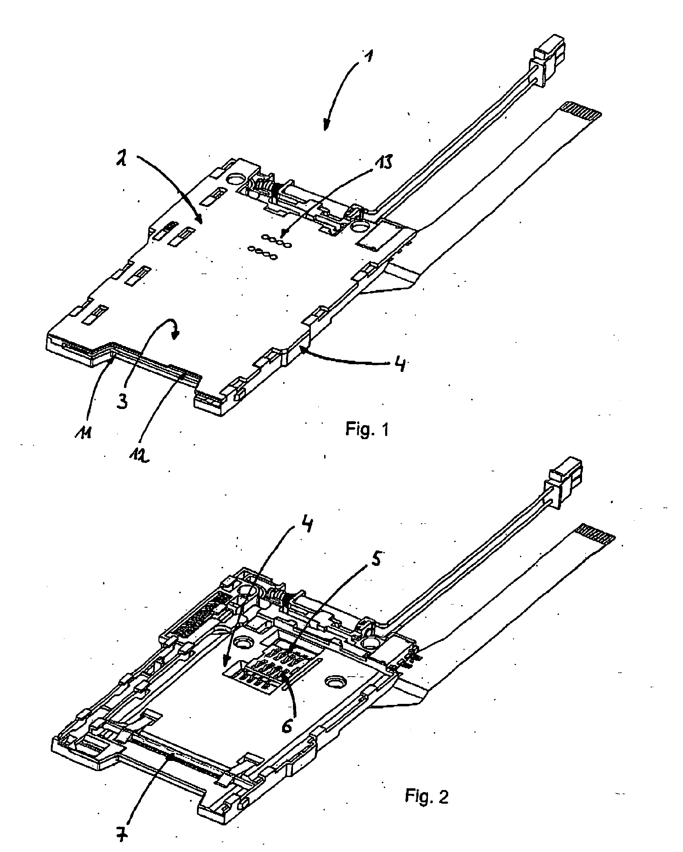

Fig. 1 zeigt einen Kartenleser, vorzugsweise einen Chipkartenleser 1, in der perspektivischen Ansicht. Der Smart-Card-Connector 1 umfasst ein im Allgemeinen aus Kunststoff hergestelltes Gehäuse 2, welches im dargestellten Ausführungsbeispiel mit einem Oberteil oder einem Deckel 3 und einem Unterteil ausgeführt ist. Das Gehäuse umfasst insbesondere einen Kontaktträger 4, wie in Fig. 2 dargestellt. Der Kontaktträger 4 beinhaltet einen Kontaktblock 5 zum Kontaktieren mit einer Smart-Card oder einer für den Kartenleser vorgesehenen Kontaktierkarte, welche mit den in den Kontaktblock 5 eingesetzten Kontakte 6 kontaktieren soll. In dem in Fig. 2 dargestellten Ausführungsbeispiel sind die Kontakte 6 etwas schräg zur Einschubrichtung der Karte angeordnet. Dies hat den Vorteil, dass die Kontakte 6 im Kontaktblock 5 beim Einschieben der Karte in den Kartenleser nicht beschädigt werden. Zwischen dem Kontaktträger 4 und dem Deckel 2 ergibt sich ein Aufnahmeraum 12 zur Aufnahme der mit dem Smart-Card-Connector zu kontaktierenden Karte. An der Vorderseite des Kartenlesers befindet sich ein nach außen hin zum Aufnahmeraum 12 befindlicher Einsetzschlitz 11 zum einführen der Karte in den Aufnahmeraum 12. Der Einsetzschtitz geht vorzugsweise nahezu über die gesamte Breite des Kartenlesers 1. Im Deckel des Kartenlesers befinden sich Prüföffnungen 13, die dazu geeignet sind, im Zusammengebauten Zustand die Lage der Kontakte 6 im Kontaktträger 4 und somit im Kontaktblock 5 zu überprüfen.

Unmittelbar hinter dem Einsetzschlitz 11, vorzugsweise nahezu über die gesamte Breite des Kartenlesers 1, ist eine Schutzklappe 7 angebracht, wie diese in Fig. 2 dargestellt ist. Die Schutzklappe 7 ist in eine dafür vorgesehene Ausnehmung 14 im Kontaktträger 4 angeordnet.

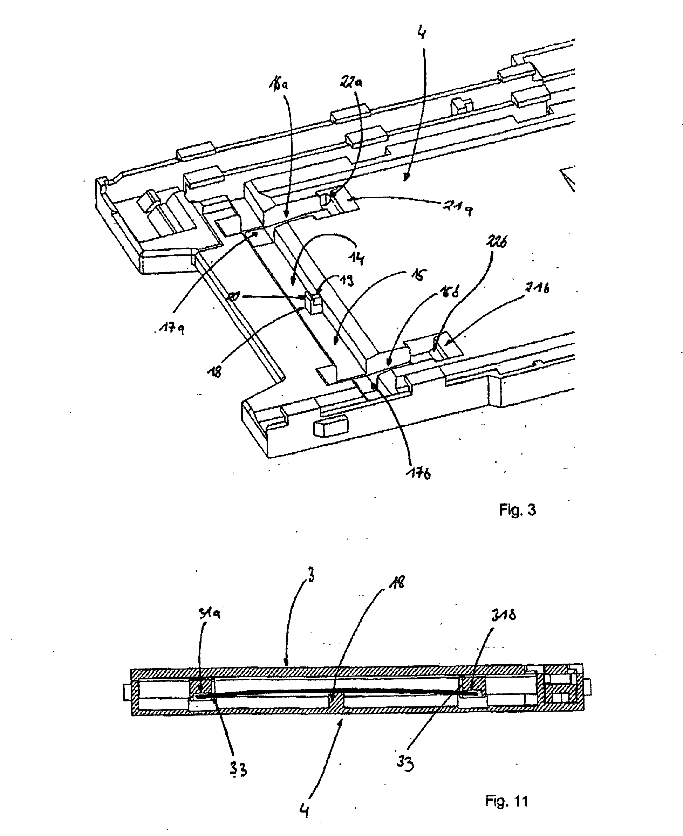

In Fig. 3 ersichtlich, ist die Lage und die Form der Ausnehmung 14, welche sich aus einem ersten quer verlaufenden Ausnehmungsabschnitt 15 und zwei dazu senkrecht orientierten längsverlaufenden Ausnehmungsabschnitten 16a, 16b zusammensetzt. Vorzugsweise sind die längsverlaufenden Ausnehmungsabschnitte 16a, 16b mit dem quer verlaufenden Ausnehmungsabschnitt 15 gekreuzt, so dass sich zwei Kreuzungspunkte 11a, 17b ergeben.

Vorzugsweise sind die quer- und längsverlaufenden Ausnehmungsabschnitte 15, 16a, 16b im Wesentlichen als U-förmige Kastenrinne ausgebildet. Circa in der Mitte des quer verlaufenden Ausnehmungsabschnittes 15 befindet sich ein teilweise in den Ausnehmungsabschnitt 15 hineinragender Vorsprung 18. Der Vorsprung 18 ragt in etwa bis in die hälfte der Breite der Ausnehmung 14 hinein, sprich bis circa in die Hälfte des quer verlaufenden Ausnehmungsabschnittes 15. Der Vorsprung 18 verfügt über eine obere Auflagefläche 19, die in ihrer Orientierung im Wesentlichen parallel zur Auflagefläche der Karte verläuft. Es ist auch denkbar, diese etwas schräg dazu anzuordnen. Neben der Auflagefläche 19 befindet sich eine Nase am Vorsprung 18, die nach oben, also senkrecht zur Auflagefläche 19 aus dem Vorsprung 18 hervorragt.
Der Vorsprung 18 mit seiner Auflagefläche 19 dient, wie noch später genauer erläutert, als Auflagefläche einer Drahtfeder 32, der Schutzklappe 7, wobei die Nase 20 dazu geeignet ist, die Drahtfeder 32 in ihrer Lage senkrecht zur Einschubrichtung der Karte zu fixieren. An dem zum einschubseitigem Ende abgewandten Seite der längsverlaufenden Ausnehmungsabschnitte 16a, 16b befinden sich Lagerelemente 21 a, 21 b.
Die Lagerelemente sind etwas verbreitert ausgebildet gegenüber der Breite der längsverlaufenden Ausnehmungsabschnitte und ragen somit zu den Außenseiten des Kartenlesers innerhalb des Kontaktträgers 4 aus. An den Seitenwänden der Lagerelementen 21a, 21b befinden sich im Wesentlichen zylinderförmige Aussparungen 22a, 22b. Diese zylinderförmigen Aussparungen 22a, 22b dienen als Drehlager für die Schutzklappe 7.

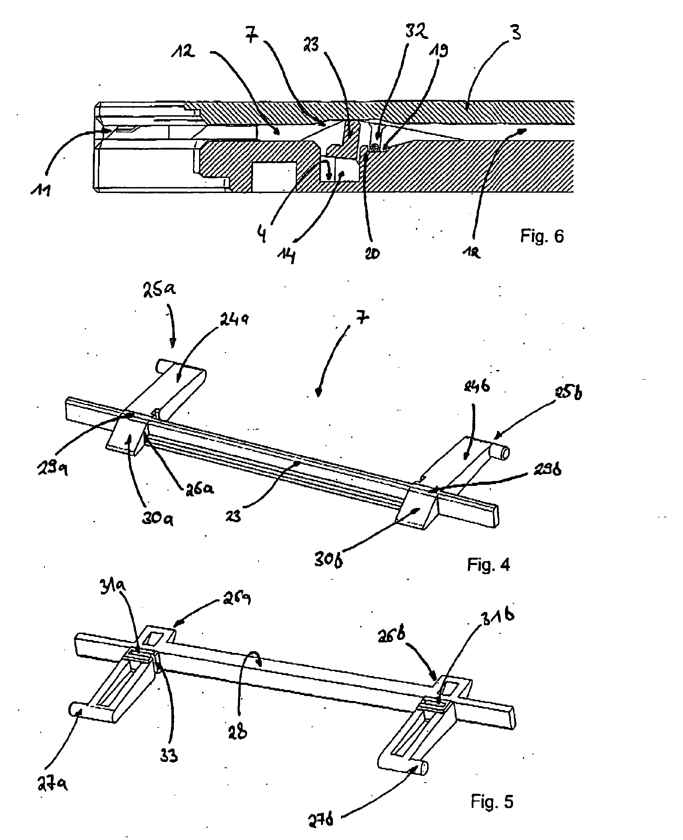

Die in Fig. 3 gezeigte Ausnehmung 14 dient der Aufnahme einer Schutzklappe 7, wie diese in Fig. 4 und 5 gezeigt ist. Die Schutzklappe 7 besteht aus einem im Wesentlichen quer verlaufenden Steg 23 und zwei dazu in einem Winkel von 90° angeordnete Verbindungsabschnitte 24a, 24b. Die Verbindungsabschnitte 24a, 24b sind in ihrer Geometrie korrespondierend zu den beiden längsverlaufenden Ausnehmungsabschnitten 16a, 16b ausgebildet, so dass diese vollständig in die längsverlaufenden Ausnehmungsabschnitte 16a, 16b eintauchen können. Ebenso ist der quer verlaufende Steg 23 im Wesentlichen in seiner Geometrie so ausgebildet, dass er vollständig in die quer verlaufenden Ausnehmungsabschnitte 15 eintauchen kann. Die beiden Verbindungsabschnitte 24a, 24b setzen sich zusammen aus einem jeweils angeordneten Lagerabschnitt 25a, 25b und einem Rampenabschnitt 26a, 26b. Somit umfasst jeder Verbindungsabschnitt 24a, 24b jeweils einen Lagerabschnitt 25a, 25b und einen Rampenabschnitt 26a, 26b. Die Lagerabschnitte 25a, 25b ragen von dem Steg 23 weg und umfassen ferner jeweils einen zylinderförmigen Nocken 27a, 27b, welcher am Ende der Lagerabschnitte 25a, 25b so angebracht ist, dass der Lagemocken nach Außen über die Lagerabschnitte 25a, 25b hinausragt.

Die Geometrie der Lagemocken entspricht den Ausnehmungen der zylinderförmigen Aussparungen 22a, 22b der korrespondieren Lagerelemente 21 a, 21 b im Kontaktträger 4 und somit in der Ausnehmung 14.

Wie in Fig. 5 dargestellte Unteransicht der Schutzklappe 7, gemäß Fig. 4, spannt die untere Auflagefläche 28 eine im Wesentlichen ebene Fläche auf, die im montierten Zustand auf der Auflagefläche der Ausnehmungen 14, 15, 16 aufliegt. Die Verbindungsabschnitte 24a, 24b bilden mit dem Steg 23 Kreuzungspunkte 29a, 29b. Die Teile der Verbindungsabschnitte 24a, 24b, die als Rampenabschnitte 26a, 26b von den Kreuzungspunkten 29a, 29b zum steckseitigen Ende hin ausgebildet sind, sind als trapezförmige Rampenabschnitte geformt. Das heißt, beginnend vom vordersten Ende steigen die Rampenabschnitte 26a, 26b in ihrer geometrischen Abmessung bis zu den Kreuzungspunkten 29a, 29b auf deren Höhe an, so dass sich schrägere Rampenflächen 30a. 30b an der Oberseite der Rampenabschnitte 26a, 26b befinden. Auf der Unterseite der Schutzklappe 7 befinden sich, wie in Fig. 5 dargestellt, Ausnehmungen 31a, 31 b, die nahe den Kreuzungspunkten 29a, 29b jeweils in den Verbindungsabschnitte 24a, 24b angebracht sind. Diese Ausnehmungen 31 a, 31 b dienen der Aufnahme einer Drahtfeder 32. Die Ausnehmungen 31a, 31 b sind so angeordnet, dass diese parallel zur Längserstreckung des Steges 23 verlaufen und eine darin montierte Drahtfeder 32 vorzugsweise im Wesentlichen parallel zum Steg 23 eingebracht ist. Die Schutzklappe 7 wird vorzugsweise aus einem Kunststoffmaterial hergestellt, welches über flexible, elastische Eigenschaften verfügt.

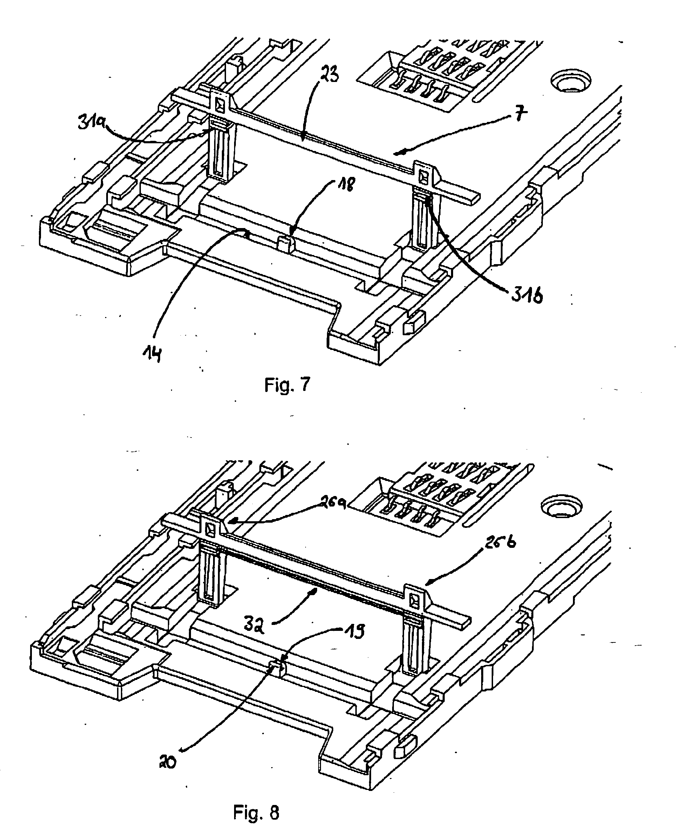

Wie in Fig. 7 gezeigt, kann die Schutzklappe 7 auf einfache Weise in den Kontaktträger 4 eingesetzt werden. Fig. 7 zeigt den Zustand kurz nachdem die Schutzklappe 7 von oben in die längsverlaufenden Ausnehmungsabschnitte 16a, 16b, beziehungsweise deren Ende, wo sich die Lagerelemente 21 a, 21 b befinden, eingesetzt werden. Dabei federn die beiden Verbindungsabschnitte 24a, 24b so aus, dass sich diese sozusagen ein Stück weit aufeinander zu bewegen und damit den Weg für die Lagernocken 27a, 27b an den Seitenwänden der Lagerelemente 21 a, 21 b freigeben, so dass die Lagernocken 27a, 27b in die dafür vorgesehene zylinderförmigen Aussparungen 22a, 22b hineinschnappen. Dieser Zustand ist in Fig. 7 gezeigt.

In Folge der zylinderförmigen Ausgestaltung der Lagerbuchsen und Lagemocken lässt sich die Schutzklappe 7 um ihre Drehachse, welche parallel zum Steg 23 verläuft, drehen und in die Ausnehmung 14 einschwenken, so wie dies in Fig. 6 gezeigt ist.

Wie in Fig. 8 dargestellt, wird vor dem Einschwenken in die in der Fig. 6 gezeigten Position eine Drahtfeder 32 in die Ausnehmungen 31a, 31 b von unten in die Schutzklappe 7 eingesetzt. Vorzugsweise verfügen die Ausnehmungen 31a, 31b über Rastmittel 33, die dazu dienen, die Drahtfeder 32 sicher in ihrer Einsetzposition zu halten, so dass diese bei Verschwenken der Schutzklappe 7 in die in Fig. 6 gezeigte Position nicht aus ihrer Lage herausrutscht. Vorzugsweise sind die Rastmittel 33 entlang der Tiefe der Ausnehmungen 31a, 31 b abgestuft, sozusagen abgetreppt angeordnet, so dass die Tiefe der Einbringposition der Drahtfeder 32 in die Ausnehmungen 31a, 31 b bestimmt werden kann. Dies hat den Grund, dass im eingeschwenkten Zustand, wie in Fig. 6, die Biegung und damit die Federkraft der Drahtfeder bestimmt werden kann.

In Fig. 6 gezeigt, ist die Schutzklappe 7 in ihre eigentliche Schutzstellung eingeschwenkt worden. Dabei liegt die Drahtfeder 32 auf der Auflagefläche 19 des Vorsprungs 18 auf. Die relative Position, sozusagen die Höhe der Auflagefläche 19, ist dabei so gewählt, dass es zu einer minimalen Durchbiegung der Drahtfeder 32 kommt und bedingt durch die Federkraft die Schutzklappe 7 an die Innenseite des Deckels 3 gedrückt wird. Dadurch versperrt der Steg 23 den Zugang zum Aufnahmeraum 12 von beziehungsweise durch den Einsetzschlitz 11. Dadurch wird gewährleistet, dass der Kartenleser 1 mit seinem Aufnahmeraum 12 nach Außen hin durch die Schutzklappe 7 verschlossen ist. Die Federkraft mit der die Schutzklappe 7 in ihrer Schließstellung gehalten wird, wird definiert einerseits durch die Tiefe der Einbringung der Drahtfeder 32 in die Ausnehmungen 31 a, 31 b, sowie die dazu relative Höhe der Auflagefläche 19 des Vorsprungs 18. Durch Skalierung dieser Maße kann damit die Haltekraft der Schutzklappe 7 bestimmt werden.

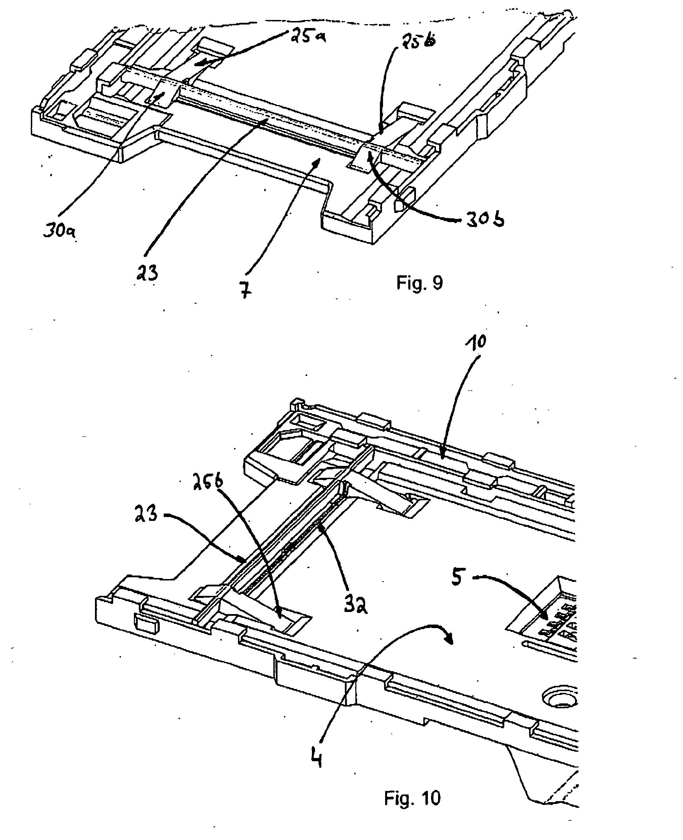

In Fig. 9 und Fig. 10 sind jeweils perspektivische Ansichten der eingesetzten Schutzklappe 7 mit eingebrachter Drahtfeder 32 in den Aufnahmeraum 12 des Kartenlesers 1 gezeigt. Wie ersichtlich ist, liegt bedingt durch die Lage der Drahtfeder 32, die sich auf der Auflagefläche 19 abstützt, die Schutzklappe 7 mit ihrer Auflagefläche 28 oberhalb der Auflage der Ausnehmung 14 und hängt somit sozusagen in der Luft drehbar gelagert an den Lagemocken 27a, 27b. Bei Druck auf die Schutzklappe 7 schwenkt diese in ihre Öffnungsposition in die Ausnehmung 14 ein und gibt den Aufnahmeraum 12 zum Einsetzschlitz 11 hin frei. Diese Freigabe erfolgt dadurch, dass bei aufgebrachtem Deckel 3 auf das Gehäuse 2 ein für die Karte definierte Aufnahmeraum 12 die Karte beim Einschieben durch den Einsetzschlitz 11 auf die schräge Rampenflächen 30a, 30b führt. Beim Auftreffen der Vorderkante einer Karte auf die schrägen Rampenflächen 30a, 30b der Rampenabschnitte 26a, 26b, werden diese zwangswelse nach unten bewegt und die Schutzklappe 7 verschwenkt in ihre Öffnungsstellung. Bei weiterem Einschieben gleitet die Karte mit ihrem steckseitigen Ende solange In den Aufnahmeraum 12 ein, bis diese am hinteren Kartenanschlag 8 zum Anliegen kommt. Nach Entnahme der Karte über einen Betätigungsmechanismus 10 gleitet die Karte wieder aus dem Kartenschacht heraus und nach Erreichen der Position der Rampenabschnitte 26a, 26b wird die Schutzklappe 7 noch vor vollständiger Entnahme der Karte aus ihrer Öffnungsstellung zurück in ihre Schließstellung bedingt durch die Federkraft der Drahtfeder 32 bewegt und kommt erneut zum Anliegen an der Innenseite des Deckels 3. Dieser Zustand ist in Fig. 11 dargestellt, bei einem Schnitt quer durch den erfindungsgemäßen Kartenleser und dem vorgelegten Ausführungsbeispiel. Deutlich zu erkennen, ist die Durchbiegung der Drahtfeder 32 entlang ihrer Achse.

### Bezugszeichenliste

### Schmutz- und Manipulationsgeschützter Kartenleser

- 1: Smart-Card-Connector/Kartenleser
- 2: Gehäuse
- 3: Deckel
- 4: Kontaktträger
- 5: Kontaktblock
- 6: Kontakte
- 7: Schutzklappe
- 8: hinterer Kartenaufschlag
- 9: eventuelle Kartenführung
- 10: Betätigungsmechanismus

- 11: Einsetzschlitz
- 12: Aufnahmeraum
- 13: Prüföffnungen
- 14: Ausnehmung
- 15: quer verlaufender Ausnehmungsabschnitt
- 16a, 16b: längs verlaufender Ausnehmungsabschnitt
- 17a, 17b: Kreuzungspunkte
- 18: Vorsprung
- 19: Auflagefläche
- 20: Nase

- 21a, 21b: Lagerelemente
- 22a, 22b: zylinderförmige Lagerbuchsen
- 23: Steg
- 24a, 24b: Verbindungsabschnitt
- 25a, 25b: Lagerabschnitt
- 26a, 26b: Rampenabschnitt
- 27a, 27b: Lagernocken
- 28: Auflagefläche
- 29a, 29b: Kreuzungspunkte
- 30a, 30b: schräge Rampenflächen

- 31a, 31b: Ausnehmungen
- 32: Drahtfeder
- 33: Rastmittel

## Patentansprüche

1. Kartenleser (1) umfassend einen Kontaktträger (4) und einen Deckel (3), welcher mit dem Kontaktträger (4) einen Aufnahmeraum (12) zur Aufnahme einer Karte bildet und einen Einsetzschlitz (11) zum Einsetzen einer Karte in den Aufnahmeraum (12) des Kartenlesers (1) bildet und wobei der Aufnahmeraum (12) durch eine Schutzklappe (7) nach Außen hin verschlossen ist, wenn sich keine Karte im Kartenleser befindet und wobei die Schutzklappe (7) drehbar gelagert ist und sich von einer Schließstellung in eine Öffnungsstellung entlang ihrer Drehachse verschwenken lässt, **dadurch gekennzeichnet, dass** die Schutzklappe im Kontaktträger (4) gelagert ist.

2. Kartenleser (1) gemäß Anspruch 1, **dadurch gekennzeichnet, dass** der Kontaktträger (4) über eine Ausnehmung (14) verfügt, in die die Schutzklappe (7) beim Einsetzten einer Karte In den Kartenleser (1) vollständig eintaucht.

3. Kartenleser (1) gemäß Anspruch 1 oder 2, **dadurch gekennzeichnet, dass** die Schutzkappe (7) über einen Steg (23) verfügt, welcher den Aufnahmeraum (12) in der Öffnungsstellung der Schutzklappe (7) nach Außen hin verschließt und das am Steg (23) zwei Lagerabschnitte (25a, 25b) angeordnet sind, welche vom Steg (23) senkrecht zu seiner Stegachse wegragen.

4. Kartenleser (1) gemäß Anspruch 3, **dadurch gekennzeichnet, dass** an den Lagerabschnitten (25a, 25b) senkrecht nach Außen zylindrische Lagemocken (27a, 27b) derart angeordnet sind, dass die durch die Lagernocken (27a, 27b) gebildete Drehachse parallel zur Stegachse des Steges (23) zu liegen kommt.

5. Kartenleser (1) gemäß einem der vorhergehenden Ansprüche, **dadurch gekennzeichnet, dass** die Schutzklappe (7) eine Drahtfeder (32) aufweist, welche sich am Kontaktträger abstützt und die Schutzklappe (7) mit ihrer Oberseite an die Innenseite des Deckels (3) des Kartenlesers (1) drückt.

6. Kartenleser (1) gemäß einem der vorhergehenden Ansprüche, **dadurch gekennzeichnet, dass** die Schutzklappe (7) über zwei Rampenabschnitte (26a, 26b) verfügt, wodurch die Schutzklappe (7) von einer Karte betätigbar ist und diese Ober die zwei Rampenabschnitte von ihrer Schließstellung in ihre Öffnungsstellung betätigen kann.

7. Kartenleser (1) gemäß Anspruch 6, **dadurch gekennzeichnet, dass** beim Einschieben einer Karte in den Kartenleser (1) die Karte mit ihrem steckseitigem Ende auf die Rampenabschnitte (26a, 26b) aufläuft und die Schutzklappe (7) **dadurch** betätigt, dass diese sich um ihre Drehachse von der Öffnungsstellung in die Schließstellung verschwenkt, derart, dass diese vollständig in die Ausnehmung (14) eintaucht.

8. Kartenleser (1) gemäß einem der Ansprüche 1, 2, 3, 5, 6, 7, **dadurch gekennzeichnet, dass** die Schutzklappe (7) Ober zwei zylindrische Lagemocken (27a, 27b) verfügt, welche mit korrespondierenden Lagerbuchsen (22a, 22b) welche im Kontaktträger (4) angebracht sind, zusammenwirken und an denen die Schutzklappe (7) mit ihren Lagemocken (27a, 27b) drehbar gelagert ist.

9. Kartenleser (1) gemäß einem der vorhergehenden Ansprüche, **dadurch gekennzeichnet, dass** die Ausnehmung (14) über einen quer verlaufenden Ausnehmungsabschnitt (15) quer zur Einsteckrichtung der Karte verfügt und über zwei dazu senkrecht orientierte in Einschubrichtung der Karte ausgebildete längsverlaufende Ausnehmungsabschnitte (16a, 16b).

10. Kartenleser (1) gemäß einem der vorhergehenden Ansprüche, **dadurch gekennzeichnet, dass** die Ausnehmungen (14, 15, 16) im Wesentlichen als U-förmige Kastenrinne im Boden des Kontaktträgers (4) ausgebildet sind und sich die längsverlaufenden Ausnehmungsabschnitte (16a, 16b) mit dem quer verlaufenden Ausnehmungsabschnitt (15) an zwei Kreuzungspunkten (17a, 17b) kreuzen.

11. Kartenleser (1) gemäß einem der Ansprüche 6, 7, 8, 9, 10, **dadurch gekennzeichnet, dass** die Rampenabschnitte (26a, 26b) Ober schräge Rampenflächen (30a, 30b) verfügen.

12. Kartenleser (1) gemäß einem der Ansprüche 6-11, **dadurch gekennzeichnet, dass** sich die Rampenabschnitte (26a, 26b) im Bereich der Kreuzungspunkte (17a, 17b) befinden, sowohl wenn sich die Schutzklappe (7) in ihrem Öffnungszustand als auch im Schließzustand befindet.

13. Kartenleser (1) gemäß einem der vorhergehenden Ansprüche, **dadurch gekennzeichnet, dass** ein Vorsprung (18) im Bereich der Ausnehmung (14) befindet, welcher über eine Auflagefläche (19) zur Auflage der Drahtfeder (32) verfügt

14. Kartenleser (1) gemäß Anspruch 13, **dadurch gekennzeichnet, dass** der Vorsprung (18) Ober eine Nase (20) verfügt, welche in Richtung des Kastenaufnahmeraumes (12) ragt.

## Claims

1. Card reader (1) comprising a contact support (4) and a cover (3) which, together with the contact support (4), forms an accommodation space (12) for accommodating a card and forms an insertion slot (11) for inserting a card into the accommodation space (12) in the card reader (1), and with the accommodation space (12) being closed with respect to the outside by a protective flap (7) when there is no card in the card reader and the protective flap (7) is rotatably mounted and can be pivoted from a closed position to an open position along its rotation axis, **characterized in that** the protective flap (7) is mounted in the contact support (4).

2. Card reader (1) according to Claim 1, **characterized in that** the contact support (4) has a recess (14) which the protective flap (7) enters fully when a card in inserted into the card reader (1).

3. Card reader (1) according to Claim 1 or 2, **characterized in that** the protective flap (7) has a crosspiece (23) which closes the accommodation space (12) with respect to the outside in the open position of the protective flap (7), and **in that** two bearing sections (25a, 25b) are arranged on the crosspiece (23), the said bearing sections projecting away from the crosspiece (23) perpendicular to its crosspiece axis.

4. Card reader (1) according to Claim 3, **characterized in that** cylindrical bearing cams (27a, 27b) are arranged on the bearing sections (25a, 25b) in a manner perpendicular towards the outside in such a way that the rotation axis which is formed by the bearing cams (27a, 27b) is parallel to the crosspiece axis of the crosspiece (23).

5. Card reader (1) according to one of the preceding claims, **characterized in that** the protective flap (7) has a wire spring (32) which is supported on the contact support and pushes the protective flap (7), by way of its upper face, against the inner face of the cover (3) of the card reader (1).

6. Card reader (1) according to one of the preceding claims, **characterized in that** the protective flap (7) has two ramp sections (26a, 26b), by means of which the protective flap (7) can be operated by a card and the said protective flap can be operated to move from its closed position to its open position by means of the two ramp sections.

7. Card reader (1) according to Claim 6, **characterized in that**, when a card is inserted into the card reader (1), the card runs onto the ramp sections (26a, 26b) by way of its insertion-side end and operates the protective flap (7) to the effect that the said protective flap pivots about its rotation axis from the open position to the closed position in such a way that it enters the recess (14) fully.

8. Card reader (1) according to one of the claims 1, 2, 3, 5, 6 ,7, **characterized in that** the protective flap (7) has two cylindrical bearing cams (27a, 27b) which interact with corresponding bearing bushes (22a, 22b), which are fitted in the contact support (4), and on which the protective flap (7) is rotatably mounted by way of its bearing cams (27a, 27b).

9. Card reader (1) according to one of the preceding claims, **characterized in that** the recess (14) has a transversely running recess section (15) transverse to the insertion direction of the card and has two longitudinally running recess sections (16a, 16b) which are formed in the insertion direction of the card and are oriented perpendicular to the said transversely running recess section.

10. Card reader (1) according to one of the preceding claims, **characterized in that** the recesses (14, 15, 16) are substantially in the form of U-shaped box channels in the base of the contact support (4) and the longitudinally running recess sections (16a, 16b) intersect the transversely running recess section (15) at two intersection points (17a, 17b).

11. Card reader (1) according to one of the claims 6, 7, 8, 9, 10, **characterized in that** the ramp sections (26a, 26b) have inclined ramp surfaces (30a, 30b).

12. Card reader (1) according to one of the claims 6-11, **characterized in that** the ramp sections (26a, 26b) are located in the region of the intersection points (17a, 17b), both when the protective flap (7) is located in its open state and in the closed state.

13. Card reader (1) according to one of the preceding claims, **characterized in that** a projection (18) is located in the region of the recess (14), the said projection having a supporting surface (19) for supporting the wire spring (32).

14. Card reader (1) according to Claim 13, **characterized in that** the projection (18) has a lug (20) which projects in the direction of the box accommodation space (12).

## Revendications

1. Lecteur de carte à puce (1) comprenant un support de contact (4) et un couvercle (3), qui forme avec le support de contact (4) un espace de réception (12) pour recevoir une carte à puce, et forme une fente d'insertion (11) pour l'insertion d'une carte à puce dans l'espace de réception (12) du lecteur de carte à puce (1), l'espace de réception (12) étant fermé vers l'extérieur par un volet de protection (7), lorsqu'aucune carte à puce ne se trouve dans le lecteur de carte à puce, et le volet de protection (7) est monté à rotation dans le support de contact (4) et peut être pivoté depuis une position de fermeture dans une position d'ouverture le long de son axe de rotation, **caractérisé en ce que** le volet de protection (7) est monté dans le support de contact (4).

2. Lecteur de carte à puce (1) selon la revendication 1, **caractérisé en ce que** le support de contact (4) dispose d'un évidement (14) dans lequel le volet de protection (7) est complètement enfoncé lors de l'insertion d'une carte à puce dans le lecteur de carte à puce (1).

3. Lecteur de carte à puce (1) selon la revendication 1 ou 2, **caractérisé en ce que** le volet de protection (7) dispose d'une nervure (23) qui ferme l'espace de réception (12) vers l'extérieur dans la position d'ouverture du volet de protection (7) et **en ce que** deux portions de palier (25a, 25b) sont disposées sur la nervure (23), lesquelles font saillie depuis la nervure (23) perpendiculairement à son axe de nervure.

4. Lecteur de carte à puce (1) selon la revendication 3, **caractérisé en ce que** des cames de palier cylindriques (27a, 27b) sont disposées sur les portions de palier (25a, 25b) perpendiculairement vers l'extérieur, de telle sorte que l'axe de rotation formé par les cames de palier (27a, 27b) vienne s'appliquer parallèlement à l'axe de nervure de la nervure (23).

5. Lecteur de carte à puce (1) selon l'une quelconque des revendications précédentes, **caractérisé en ce que** le volet de protection (7) présente un ressort en fil métallique (32), qui s'appuie sur le support de contact, et presse le volet de protection (7) avec son côté supérieur contre le côté intérieur du couvercle (3) du lecteur de carte à puce (1).

6. Lecteur de carte à puce (1) selon l'une quelconque des revendications précédentes, **caractérisé en ce que** le volet de protection (7) dispose de deux portions de rampe (26a, 26b), de sorte que le volet de protection (7) puisse être actionné par une carte à puce et puisse actionner celle-ci par le biais des deux portions de rampe de sa position de fermeture dans sa position d'ouverture.

7. Lecteur de carte à puce (1) selon la revendication 6, **caractérisé en ce que** lors de l'insertion d'une carte à puce dans le lecteur de carte à puce (1), la carte à puce avance avec son extrémité côté enfichage vers les portions de rampe (26a, 26b) et actionne le volet de protection (7) **en ce que** celui-ci pivote autour de son axe de rotation de la position d'ouverture dans la position de fermeture, de telle sorte que celui-ci pénètre complètement dans l'évidement (14).

8. Lecteur de carte à puce (1) selon l'une des revendications 1, 2, 3, 5, 6, 7 précédentes, **caractérisé en ce que** le volet de protection (7) dispose de deux cames de palier cylindriques (27a, 27b), qui coopèrent avec des douilles de palier correspondantes (22a, 22b) qui sont montées dans le support de contact (4), et sur lesquelles le volet de protection (7) est monté à rotation avec ses cames de palier (27a, 27b).

9. Lecteur de carte à puce (1) selon l'une quelconque des revendications précédentes, **caractérisé en ce que** l'évidement (14) dispose d'une portion d'évidement (15) s'étendant transversalement, transversalement à la direction d'enfoncement de la carte à puce, et de deux portions d'évidement (16a, 16b) orientées perpendiculairement à celle-ci, s'étendant longitudinalement et réalisées dans la direction d'enfoncement de la carte à puce.

10. Lecteur de carte à puce (1) selon l'une quelconque des revendications précédentes, **caractérisé en ce que** les évidements (14, 15, 16) sont réalisés essentiellement sous forme de rainure de caisson en forme de U dans le fond du support de contact (4), et les portions d'évidement s'étendant longitudinalement (16a, 16b) croisent la portion d'évidement s'étendant transversalement (15) en deux points d'intersection (17a, 17b).

11. Lecteur de carte à puce (1) selon l'une des revendications 6, 7, 8, 9, 10 précédentes, **caractérisé en ce que** les portions de rampe (26a, 26b) disposent de surfaces de rampe obliques (30a, 30b).

12. Lecteur de carte à puce (1) selon l'une des revendications 6-11 précédentes, **caractérisé en ce que** les portions de rampe (26a, 26b) se trouvent dans la région des points d'intersection (17a, 17b), à la fois lorsque le volet de protection (7) se trouve dans son état ouvert et lorsqu'il se trouve dans son état fermé.

13. Lecteur de carte à puce (1) selon l'une quelconque des revendications précédentes, **caractérisé en ce qu'**une saillie (18) se trouve dans la région de l'évidement (14), laquelle dispose d'une surface d'appui (19) pour l'appui du ressort en fil métallique (32).

14. Lecteur de carte à puce (1) selon la revendication 13, **caractérisé en ce que** la saillie (18) dispose d'un nez (20) qui pénètre dans la direction de l'espace de réception de caisson (12).
